# EUROPÄISCHE PATENTANMELDUNG

(11) **EP 1 039 393 A2**
(43) Veröffentlichungstag der Anmeldung: **27.09.2000**
(21) Anmeldenummer: 00250098.1
(22) Anmeldetag: 21.03.2000
(51) Int. Cl.: G06F 15/02

(54) **Währungsumrechner**

(30) Priorität: 21.03.1999 DE 19914278; 02.06.1999 DE 19925856; 14.01.2000 DE 10002888
(71) Anmelder: Fimor S.A., 72058 Le Mans, Cedex 2 (FR)
(72) Erfinder: Zuckermann, Alex, 72550 La Qunite (FR)
(74) Vertreter: Eisenführ, Speiser & Partner

(57) **Zusammenfassung**

Die Erfindung betrifft eine Vorrichtung zur Währungsumrechnung, mit einer Eingabeeinheit (12), die für die manuelle Eingabe von Währungsbeträgen ausgebildet ist und Auswahlmittel (14, 16) für die Bestimmung einer Eingabewährung aufweist, einer Recheneinheit, die mit der Eingabeeinheit (12) verbunden und zur Durchführung der Umrechnung eines eingegebenen Währungsbetrages sowie zur Durchführung von Grundrechenoperationen mit Eingabebeträgen derselben Währung ausgebildet ist, einer Ausgabeeinheit (28, 30), die mit der Recheneinheit verbunden ist, eine erste (28) und eine zweite, der ersten benachbart angeordnete Anzeigezeile (30) aufweist und zur gleichzeitigen Anzeige eines eingegebenen und eines umgerechneten Währungsbetrages in jeweils einer der Anzeigezeilen ausgebildet ist. Die Recheneinheit ist zusätzlich zur Durchführung der Grundrechenoperationen mit Eingabebeträgen unterschiedlicher Währungen ausgebildet.

## Beschreibung

Die Erfindung betrifft eine Vorrichtung zur Währungsumrechnung, mit einer Eingabeeinheit, die für die manuelle Eingabe von Währungsbeträgen ausgebildet ist und Auswahlmittel für die Bestimmung einer Eingabewährung aufweist, einer Recheneinheit, die mit der Eingabeeinheit verbunden und zur Durchführung der Umrechnung eines eingegebenen Währungsbetrages sowie zur Durchführung von Grundrechenoperationen mit Eingabebeträgen derselben Währung ausgebildet ist, einer Ausgabeeinheit, die mit der Recheneinheit verbunden ist, einen ersten und einen zweiten, dem ersten benachbart angeordneten Anzeigebereich aufweist und zur gleichzeitigen Anzeige eines eingegebenen und eines umgerechneten Währungsbetrages in jeweils einer der Anzeigezeilen ausgebildet ist.

In den an der Währungsumstellung beteiligten elf Ländern der Europäischen Union wird ab dem Jahr 2002 die Währung Euro das alleinige gesetzliche Zahlungsmittel sein. Damit wird den Bürgern dieser Länder eine Umstellung auf ein neues finanzielles Bezugssystem abverlangt. Die Beurteilung beispielsweise von ausschließlich in Euro angegebenen Preisen wird in der Umstellungsphase dadurch erschwert, daß die bisher verwendeten Maßstäbe zum Preisvergleich nur nach Umrechnungen verwendbar sind, die jedoch im Kopf nicht leicht durchführbar sind.

Nach der Währungsumstellung wird es weiterhin über eine gewisse Zeitspanne möglich sein, sowohl mit nationaler Währung als auch mit der Währung Euro zu zahlen. Wechselgeld wird jedoch allein in Euro herausgegeben werden.

Hierbei wird jedermann im Alltag häufig Währungsbeträge sowohl in die jeweils andere Währung umrechnen als auch mit einander addieren oder voneinander subtrahieren müssen. Auch andere einfache Grundrechenoperationen wie Division und Multiplikation müssen mit Währungsbeträgen durchgeführt werden.

Es sind bereits viele verschiedene Rechner auf dem Markt, die neben den vier Grundrechenarten eine Umrechnung von Währungsbeträgen zwischen einer nationalen Währung und dem Euro anbieten. So beschreibt die Druckschrift DE 298 09 712 U1 einen Währungsrechner, bei dem eingegebene Währungsbeträge zugleich in Euro und in einer nationalen Währung angezeigt werden können. Auch verfügt dieser bekannte Währungsrechner über die Grundrechenfunktionen Addition, Subtraktion, Multiplikation und Division.

Jedoch können diese Rechenoperationen stets nur in einer Währung durchgeführt werden. Damit ist es jedoch einem Verkäufer nicht auf einfache Weise möglich, beispielsweise das Wechselgeld in Euro zu berechnen, wenn ein Kunde in nationaler Währung und nicht passend bezahlt hat. Der Verkäufer muß in einer solchen Situation zuerst den bezahlten Betrag in Euro umrechnen und dann die Differenz zwischen dem Kaufpreis und dem umgerechneten Betrag bilden.

Um das Einsatzgebiet eines Währungsumrechnermodells so groß wie möglich zu machen, wurden Vorrichtungen entwickelt, die Umrechnungskonstanten zwischen der Währung Euro und mehreren oder allen Währungen der beteiligten Länder in einem Speicher enthalten oder mit entsprechend programmierbaren Speichern ausgestattet sind. Durch die Betätigung von Auswahlelementen wird bestimmt, mit welcher Landeswährung verglichen wird.

So ist aus der Druckschrift DE 297 03 630 U1 ein Rechner bekannt, bei dem zusätzlich zu einer Zifferntastatur mehrere paarweise angeordnete Auswahltasten für die Bestimmung jeweils einer Währung und der Umrechnungsrichtung vorgesehen sind. Dabei ist die erste Taste eines solchen Tastenpaares mit einem Buchstabenkürzel einer Landeswährung beschriftet und die zweite Taste mit "Euro".

Nachteilig ist, daß durch das Hinzufügen einer Anzahl von Auswahltasten die Umrechnungsvorrichtung zum einen unübersichtlich und zum anderen aufwendig in der Herstellung wird. Um alle beteiligten Währungen auswählen zu können, müssen bei einem solchen Gerät nicht weniger als zwanzig Auswahltasten vorgesehen sein.

Nachteilig ist weiterhin, daß dem Benutzer eines solchen Gerätes nicht intuitiv klar wird, welche genaue Funktion die genannten Auswahltasten haben. So ist durch die Beschriftung einer Taste mit einem Währungskürzel nicht unmittelbar ersichtlich, ob nach Betätigung der Taste die Eingabe oder die Ausgabe in der betreffenden Währung erfolgen soll.

Aufgabe der Erfindung ist es, einen Währungsumechner der eingangs genannten Art anzugeben, der besonders einfach bedienbar ist.

Die Aufgabe wird durch einen Währungsumrechner mit den im Anspruch 1 genannten Merkmalen gelöst.

Erfindungsgemäß ist die Recheneinheit zusätzlich zur Durchführung der Grundrechenoperationen mit Eingabebeträgen zweier oder mehrerer unterschiedlicher Währungen ausgebildet. Es können also bei der Addition und Subtraktion von Währungsbeträgen Summanden lediglich einer Währung oder Summanden unterschiedlicher Währungen miteinander verrechnet werden. Auch bei einer Kombination von Strich- und Punktrechenarten, also Addition und Subtraktion zum einen sowie Multiplikation und Division zum anderen, können für eine Berechnung die Währungsbeträge in unterschiedlichen Währungen eingegeben werden. Durch diese Gestaltung der Recheneinheit werden dem Nutzer des erfindungsgemäßen Währungsrechners bei der Verrechnung von Beträgen unterschiedlicher Währungen viele Umrechnungsschritte erspart.

Umgangssprachlich formuliert können mit Hilfe der erfindungsgemäßen Vorrichtung also "Äpfel und Birnen" addiert oder subtrahiert werden. Dies ist insbesondere von Vorteil, wenn zwei Währungen nebeneinander gebräuchlich sind.

Bei einer bevorzugten Ausführungsform der Erfindung ist mindestens eine Teilanzahl der zur Währungsumrechnung erforderlichen Konstanten in einem mit der Recheneinheit verbundenen Festwertspeicher enthalten. Die Konstanten werden also herstellerseits festgelegt und können nachträglich nicht verändert werden. Dadurch ist die Zuverlässigkeit der Funktion der Vorrichtung garantierbar.

Bei einem besonders bevorzugten Ausführungsbeispiel der Erfindung sind die gesetzlich festgelegten Umrechnungskonstanten zwischen der Währung Euro und einer jeweiligen Landeswährung herstellerseits fest eingespeichert. Bevorzugt wird für eine Umrechnung von Euro in eine nationale Währung oder umgekehrt lediglich eine Umrechnungskonstante verwendet und je nach Umrechnungsrichtung von der Recheneinheit eine Multiplikation oder Division durchgeführt. Es versteht sich jedoch, daß alternativ auch zwei zueinander reziproke Umrechnungsfaktoren eingespeichert sein können, auf die die Recheneinheit je nach Umrechnungsrichtung zugegreift, wobei zur Umrechnung stets eine Multiplikation oder stets eine Division durchgeführt wird.

Die Bestimmung der Umrechnungsrichtung ist intuitiv durchführbar, wenn die Auswahlmittel ein erstes und ein zweites manuell betätigbares Auswahlelement aufweisen und die Recheneinheit zur Multiplikation bzw. Division eines Eingabebetrages mit der bzw. durch die Umrechnungskonstante ausgebildet ist, je nach dem, ob das erste oder zweite Auswahlelement betätigt wird.

Zur Erhöhung der Übersichtlichkeit wird vorgeschlagen, die Ausgabeeinheit zur Anzeige von Beträgen in der Währung Euro im ersten und zur Anzeige von Beträgen in der nationalen Währung im zweiten Anzeigebereich, unabhängig davon, welche Währung als Eingabewährung bestimmt ist, auszubilden. Dadurch wird vermieden, daß der Benutzer die Orientierung darüber verliert, welche Währung in welcher Zeile angezeigt ist.

Die Anzeigebereiche sind vorzugsweise als Anzeigezeilen ausgebildet, können aber auch eine anderem beispielsweise spaltenförmige Gestaltung aufweisen. Auch können die Zeichen und Ziffern in einem Anzeigebereich nicht linear neben- oder untereinander, sondern beispielsweise auch einer Wellenkontur folgend angeordnet sein.

Dabei kann jedem Auswahlelement eine Anzeigezeile zugeordnet werden derart, daß in der Anzeigezeile nur Beträge in der durch das zugeordnete Auswahlelement auswählbaren Währung anzeigbar sind. Einem intuitiven Gebrauch weiter entgegenkommend können die Auswahlelemente neben der jeweils zugeordneten Anzeigezeile angeordnet werden.

Werden die Anzeigezeilen in unmittelbarer Nachbarschaft zueinander parallel angeordnet, so können auch die Auswahlelemente in Verlängerung der Anzeigezeilen übereinander angeordnet werden. Auf diese Weise bestimmt der Nutzer mit der Betätigung eines Auswahlelementes intuitiv auch die Anzeigezeile, die den Eingabebetrag wiedergibt. Alternativ sind die Anzeigezeilen selbstverständlich auch in Verlängerung zueinander angeordnet sein. Hier liegt es nahe, die Auswahlelemente unmittelbar unter oder über der zugeordneten Anzeigezeile zu platzieren.

Wesentlich ist die Zuordnung je eines Auswahlelementes zu je einem Anzeigebereich.

Bei einer weiteren Ausführungsform der Erfindung ist die Recheneinheit zur Währungsumrechnung Eingabeschritt für Eingabeschritt und die Ausgabeeinheit zur Anzeige des Eingabebetrages sowie des Ergebnisses der Umrechung Eingabeschritt für Eingabeschritt ausgebildet. Ein Eingabebetrag wird Ziffer um Ziffer eingegeben. Ein Eingabeschritt besteht dabei im Drücken derjenigen Zifferntaste, die der gerade einzugebenden Stelle des Betrages entspricht. Auch ein noch nicht vollständig eingegebener Betrag wird also sofort umgerechnet und das Ergebnis der Umrechnung wird in der jeweils anderen Anzeigezeile dargestellt. Mit jeder eingegebenen Ziffer wächst somit der in beiden Anzeigen dargestellte Betrag. Auf diese Weise wird zum einen ein besonderes Auslöseelement zum Start der Umrechnung eingespart. Zum anderen erleichtert auch diese Maßnahme eine intuitive Benutzung der Vorrichtung, weil stets die Geldbeträge der beiden Währungen gegenübergestellt sind.

Eine Ausführungsform der Erfindung sieht die Umrechnung zwischen der Währung Euro und genau einer nationalen Währung eines Mitgliedsstaates der europäischen Währungsunion vor. Ein solches Gerät ist besonders übersichtlich, weil dem Benutzer nicht die oft verwirrende Auswahl zwischen verschiedenen Eingabewährungen auferlegt wird. Dieser Währungsrechner eignet sich für alle alltäglichen Situationen, in denen in einem bestimmten Land der Währungsunion Geldbeträge zwischen der nationalen Währung und dem Euro umgerechnet werden müssen.

In einer Variante ist aber auch die Umrechnung zwischen der Währung Euro und allen nationalen Währungen der Mitgliedsstaaten der europäischen Währungsunion durchführbar und kann durch Betätigung eines Währungsauswahlelementes eine nationale Währung zur Umrechnung ausgewählt werden. Diese Ausführungsform eignet sich insbesondere für Personen, die häufig in andere Mitgliedsstaaten der Währungsunion reisen. Für eine Ausführung des erfindungsgemäßen Währungsrechners als Multidevisenrechner im Bereich der Europäischen Währungsunion enthält der Festwertspeicher die zur Umrechnung zwischen der Währung Euro und allen nationalen Währungen der Mitgliedsstaaten der europäischen Währungsunion erforderlichen Umrechnungskonstanten.

Für eine einfache Bedienbarkeit eines derartigen Multidevisenrechners ist die Art und Weise der Währungsauswahl besonders wichtig. Es kann beispielsweise ein Auswahlelement vorgesehen sein, bei dessen Betätigung von einer ursprünglich ausgewählten nationalen Währung zur nächsten weitergeschaltet wird. Durch entsprechend oft wiederholte Betätigung der Auswahltaste werden nach Art eines Zyklus nacheinander alle nationalen Währungen ausgewählt, bis sich der Währungskreis schließt und wieder zur ursprünglich ausgewählten Währung geschaltet wird.

Eine alternative, bevorzugte Ausführungsform der Erfindung enthält Steuermittel, die mit der Eingabeeinheit sowie mit der Recheneinheit verbunden sind und zur Erfassung der Betätigungsdauer und/oder einer Mehrfachbetätigung mindestens eines Eingabeelementes und/oder Auswahlelementes sowie zur Steuerung des Zugriffs der Recheneinheit auf eine jeweilige Umrechnungskonstante im Festwertspeicher in Abhängigkeit vom betätigten Eingabeelement sowie der Betätigungsdauer und/oder Betätigungshäufigkeit ausgebildet sind. Bei diesem Ausführungsbeispiel entfallen separate Auswahlelemente für die Bestimmung der nationalen Währung. Statt dessen kann einer oder mehreren ohnehin vorgesehen Tasten, beispielsweise Zifferntasten, zusätzlich die Auswahlfunktion für jeweils eine nationale Währung zugeordnet werden. Es kann beispielsweise durch eine von der Bedienung von Computermäusen her bekannte zweimalige Betätigung einer Zifferntaste kurz hintereinander die Auswahl einer der betätigten Taste zugeordneten nationalen Währung vorgenommen werden. Bei einem anderen, verwandten Ausführungsbeispiel wird statt eines solchen "Doppelklicks" eine Währungsauswahl durch längeres Drücken einer jeweiligen Zifferntaste vorgenommen, etwa für zwei Sekunden. Hierbei wird also mit dem Loslassen einer betätigten Zifferntaste, je nach Betätigungsdauer, entweder eine Umrechnung gestartet oder eine nationale Währung ausgewählt. Dies unterscheidet das vorliegende Ausführungsbeispiel von gängigen Ausführungsformen, bei denen der Augenblick des Beginns der Betätigung eines Eingabe- oder Auswahlelementes für die von der Vorrichtung durchzuführende Operation entscheidend ist.

Aber auch andere, einfache Arten der Währungsauswahl sind bei dem erfindungsgemäßen Währungsrechner einsetzbar. In einer alternativen Ausbildung etwa weist der Währungsrechner Steuermittel auf, die mit der Eingabeeinheit sowie mit der Recheneinheit verbunden und nach Art einer Menüsteuerung zur Steuerung des Zugriffs der Recheneinheit auf eine jeweilige Umrechnungskonstante im Festwertspeicher ausgebildet sind. Hierzu ist beispielsweise ein Anzeigefeld vorgesehen, in dem bei Betrieb der Vorrichtung Währungskürzel für alle nationalen Währungen sichtbar sind. Ein Aktivierungszeichen kann durch Betätigung einer Auswahltaste von einem zum nächsten Währungskürzel weitergeschaltet werden. Das Aktivierungszeichen kann beispielsweise nach Art eines Cursors ein Unterstrich unter dem aktuell angewählten Währungskürzel sein. Alternativ kann auch eine Invertierung der hellen und dunklen Bildbestandteile des Währungskürzels im Anzeigefeld vorgenommen werden.

Weitere Ausführungsbeispiele mit alternativen Arten der Währungsauswahl werden unten anhand der Zeichnung beschrieben. Alle im Rahmen dieser Anmeldung beschriebenen Maßnahmen zur Auswahl und Anzeige ausgewählter Währungen bei einem Multidevisenrechner sind unabhängig davon realisierbar, ob mit diesem Währungsumrechner zusätzlich Grundrechenoperationen ausführbar sind oder nicht. Es kann zur weiteren Vereinfachung der Bedienung bei besonderen Ausführungsformen sogar günstig sein, auf die Ausstattung für die Durchführung von Grundrechenoperationen zu verzichten. Denn je weniger Funktionstasten eine solche Vorrichtung aufweist, desto intuitiver ist ihre Handhabung.

Zur Anzeige der ausgewählten Währung weist ein weiteres Ausführungsbeispiel mindestens ein Symbolanzeigefeld auf, das der zweiten Anzeigezeile zugeordnet ist und zur Anzeige von Zeichen zur Symbolisierung der ausgewählten nationalen Währung ausgebildet ist. Bei einer Betätigung des Währungsauswahlelementes wird also dem Benutzer sofort angezeigt, welche nationale Währung aktuell ausgewählt ist. Die Zeichen für die einzelnen Währungen sind vorzugsweise die offiziell verwendeten Buchstabenkombinationen und in einem Speicher enthalten.

Das Symbolanzeigefeld ist hierbei vorzugsweise in der zugeordneten Ausgabezeile angeordnet. Auf diese Weise wird vermieden, daß ein Benutzer die Ausgabezeile für Euro mit der für die nationale Währung verwechselt.

Bei einem weiteren Ausführungsbeispiel der Erfindung ist ein Schreib-Lese-Speicher zur Aufnahme veränderlicher Umrechnungskonstanten vorgesehen, der mit der Recheneinheit verbunden ist. Auf diese Weise kann der Euro nach dem neuesten Kurs auch in Währungen anderer Länder umgerechnet werden, die der Europäischen Währungsunion nicht angehören, so etwa in Pfund, Dollar, Yen oder Schweizer Franken. Die Eingabeeinheit weist mindestens ein Eingabe- oder Auswahlelement auf, das zusätzlich zu den oben beschriebenen Eingabe- und/oder Auswahlfunktionen eine Aktivierungs- und Deaktivierungsfunktion für einen Programmiermodus hat. Es ist eine Steuerschaltung vorgesehen, die nach Aktivierung des Programmiermodus eine bei der Betragseingabe zur Umrechnung aktivierte Sperrschaltung zwischen der Eingabeeinheit und dem Schreib-Lese-Speicher deaktiviert. Anschließend kann eine Umrechnungskonstante eingegeben werden, die nach Deaktivierung des Programmiermodus eine im Schreib-Lese-Speicher anstelle einer vorhandenen und dieser Taste zugeordneten Umrechnungskonstante abgespeichert wird.

Die Aktivierung bzw. Deaktivierung des Programmiermodus kann in besonders einfacher Weise durch einen Doppelklick oder eine lange Betätigung der entsprechenden Taste vorgenommen werden. Wichtig ist jedoch, daß sich die die Betätigungsart zur Aktivierung/Deaktivierung des Programmiermodus unterscheidet sich von der Betätigungsart zur oben beschriebenen Durchführung der Auswahlfunktion. So wird vermieden, daß der Inhalt des Schreib-Lese-Speichers ungewollt überschrieben wird.

Die Vorrichtung wird in einer Variante als Taschenrechner im Scheckkartenformat ausgebildet. Dadurch kann sie bequem in der Hosen- oder Jackentasche mitgeführt werden und ist jederzeit verfügbar.

Eine andere Variante der Erfindung dient insbesondere zur Verwendung an Verkaufsständen, etwa auf Märkten. Dieser Währungsumrechner hat etwa die Größe eines Tischrechners und weist eine besonders große und robuste Eingabeeinheit auf. Die Anzeigeeinheit ist so gestaltet, daß sowohl ein Kunde als auch der Verkäufer die angezeigten Beträge bequem erkennen können. Beispielsweise sind zwei Anzeigen vorgesehen, von denen eine dem Kunden und die andere dem Verkäufer zugewandt ist. Die dem Kunden zugewandte Anzeige kann auch lösbar an der Vorrichtung befestigt und separat auf stellbar sein. Dabei erfolgt die Signalisierung zur Steuerung der Anzeige beispielsweise durch ein Kabel oder drahtlos mit Hilfe einer Infrarot- oder Funksignalisierung wie bei bekannten Fernsteuerungsvorrichtungen.

Schließlich ist in Weiterführung der letztgenannten Ausführungsform auch eine handelsübliche Registrierkasse um die erfindungsgemäßen Merkmale erweiterbar. Vorzugsweise werden die oben dargestellten, durch die Erfindung realisierten Funktionsmerkmale bei einer solchen Kasse lediglich optional zur Verfügung stehen, weil sie nur während einer Umgewöhnungsphase unmittelbar nach der Umstellung von nationalen Währungen auf den Euro benötigt werden.

Zur Vervollständigung der Information für den Benutzer wird in einem weiteren Ausführungsbeispiel der Umrechnungsfaktor zwischen der ersten und der ausgewählten zweiten Währung in einem zusätzlichen Anzeigebereich dargestellt.

Weitere Vorteile und Merkmale werden bei der folgenden Beschreibung eines Ausführungsbeispiels der Erfindung anhand der Zeichnung deutlich. Darin zeigen:

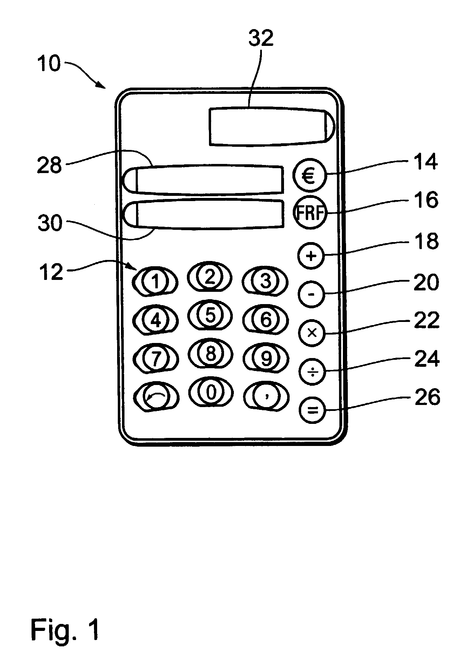

- Figuren 1 bis 6: Draufsichten verschiedener Ausführungsbeispiele der erfindungsgemäßen Vorrichtung.

Figur 1 zeigt einen erfindungsgemäßen Währungsrechner für die Umrechnung zwischen der Währung Euro und der Währung Französische Francs in Draufsicht.

Der in der Figur dargestellte Währungsrechner 10 hat in etwa die Seitenmaße einer Scheckkarte. Auf seiner hier dargestellten Vorderseite weist er eine Eingabeeinheit 12 mit Zifferntasten für die Ziffern 0 bis 9 auf, weiterhin eine Taste für das Dezimaltrennzeichen (hier mit "," gekennzeichnet) sowie eine mit einem nach links weisenden Pfeil gekennzeichnete Funktionstaste, deren Betätigung eine Löschung der vorangegangenen Eingabe veranlaßt.
Längs dem rechten Rand der Vorderseite des Währungsrechners 10 ist eine Anzahl weiterer Funktionstasten angeordnet: zwei Auswahltasten 14 und 16 dienen zur Auswahl der Eingabewährung; Funktionstasten 18 bis 24 sind für die vier Grundrechenarten Addition ("+"), Subtraktion "-"), Multiplikation ("X") und Division ("÷") vorgesehen; unterhalb der Divisionstaste 24 ist schließlich eine mit "=" gekennzeichnete Auslösetaste 26 vorgesehen. Einzelheiten der Funktionsweisen der genannten Funktionstasten werden weiter unten erläutert.

Zwei LCD-Anzeigezeilen 28 und 30 sind oberhalb der Eingabeeinheit 12 angeordnet. Sie verlaufen parallel zur Schmalseite etwa vom linken Rand des Rechners 10 und grenzen rechts an die Auswahlelemente 14 und 16 an. Durch diese Anordnung der Anzeigezeilen 28 und 30 jeweils in einer Linie mit den Auswahlelementen 14 bzw. 16 wird eine eindeutige Zuordnung der Währungen zu den Anzeigezeilen erzielt. Dies wird zusätzlich durch eine entsprechende Beschriftung der Auswahlelemente 14 und 16 mit dem Euro-Symbol und dem offiziellen Währungskürzel "FRF" unterstrichen: in der Anzeigezeile 28 werden stets Beträge in Euro und in der Anzeigezeile 30 stets Beträge in der nationalen Währung, hier in Französischen Francs angezeigt.

Die Anzeigezeilen sind jeweils 8-stellig und können zusätzlich zwei Dezimalstellen anzeigen. Es können aber auch Währungen mit weniger als zwei Dezimalstellen (wie die etwa Italienische Lira, die Spanische Peseta, der Portugiesische Escudo) dargestellt werden. Zusätzlich, alternativ unter Verringerung der Anzeige um zwei Ziffernstellen, ist in jeder LCD-Anzeigezeile ein Minuszeichen und ein Aktivierungssymbol darstellbar. Das Aktivierungssymbol kann kontinuierlich oder blinkend dargestellt werden. Es ist stets nur in derjenigen Anzeigezeile sichtbar, die der augenblicklich ausgewählten Eingabewährung zugeordnet ist. Das Symbol kann neben den Ziffernstellen, alternativ auch oberhalb oder unterhalb der Ziffernstellen angeordnet sein. Es können zur weiteren Verdeutlichung auch unterschiedliche Aktivierungssymbole in den beiden Ausgabezeilen vorgesehen sein.

Eine nahe dem oberen Rand der Vorderseite angeordnete Solarzelle 32 dient der Energieversorgung des Währungsrechners.

Im folgenden wird die Funktionsweise des Währungsrechners 10 im einzelnen erläutert.

Der Währungsrechner 10 wird durch Betätigung einer der Auswahltasten 14 oder 16 eingeschaltet. Damit erfolgt gleichzeitig die Auswahl der einzugebenden Währung. Wird also bei ausgeschaltetem Rechner 10 beispielsweise die Eurotaste 14 betätigt, so erscheint in der Anzeigezeile 28 das Aktivierungssymbol und eine 0.

Anschließend erfolgt eine Eingabe eines Währungsbetrages in Euro. Nach jedem Eingabeschritt erscheint in der Anzeigezeile 28 der bislang eingegebene Betrag in Euro und in der Anzeigezeile 30 unmittelbar der dem bislang eingegebenen Betrag in Euro entssprechende, umgerechnete Betrag in Französischen Franc. Die Umrechnung erfolgt also Eingabeschritt für Eingabeschritt. Das Ergebnis wird unmittelbar nach jeder Umrechnung angezeigt.

Soll eine neue Eingabe gemacht werden, so wird die Pfeiltaste im Eingabefeld 12 gedrückt. Anschließend erscheint in beiden Anzeigezeilen 28 und 30 eine "0" und in der Anzeigezeile 28 zusätzlich das Aktivierungssymbol, da keine Änderung der Eingabewährung eingegeben wurde.

Soll dagegen eine neue Eingabe für eine Umrechung in entgegengesetzter Richtung erfolgen, so wird nun die Auswahltaste 16 betätigt. Es erscheint dann in der Anzeigezeile 30 das Aktivierungssymbol und eine "0", während der Inhalt Anzeigezeile 28 vollständig gelöscht wird. Der weitere Verlauf der Eingabe und Umrechnung entspricht dem zuvor dargestellten.

Die Verbindung der bisher dargestellten Umrechnungsfunktion mit den Grundrechenfunktionen wird im folgenden anhand von Beispielen erläutert. Die Beispiele sind in Tabellenform dargestellt. In den Zeilen der Tabellen sind von oben nach unten aufeinanderfolgende Ereignisse enthalten. Die linke, mit "Eingabe" gekennzeichnete Spalte gibt an, welche Taste oder Tastenkombination betätigt wird. Dabei ist die Eingabe von Zahlen der Einfachheit halber in einer Zeile dargestellt. Es versteht sich, daß die Währungsumrechnung, wie oben dargestellt, stets simultan mit der Eingabe der einzelnen Ziffern erfolgt. Die mittlere Spalte "EURO-Anzeige" ist in sich zweigeteilt. In der linken Teilspalte ist angegeben, ob bei dem in der Eingabespalte dargestellten Eingabeschritt die Anzeigezeile 28 das Aktivierungssymbol darstellt oder nicht. Ist es der Fall, so wird dies durch die Abkürzung "Akt" gekennzeichnet. Das Aktivierungssymbol kennzeichnet - wie oben beschrieben wurde - stets die für die Eingabe ausgewählte Währung und ist immer der der ausgewählten Währung entsprechenden Anzeigezeile 28 oder 30 zugeordnet. Die rechte Teilspalte gibt die in der Anzeigezeile 30 dargestellte Zahl wieder. Die rechte Spalte "FRF-Anzeige" gibt in gleichartiger Weise den Inhalt der Anzeigezeile 30 wieder. Auch hier dient die linke Teilspalte zur Kennzeichnung des angezeigten Aktivierungssymbols und die rechte Teilspalte zur Wiedergabe des angezeigten Betrages. Ein leeres Feld bedeutet, daß nichts angezeigt wird.

### Beispiel 1:

Es sollen zwei in Euro eingegebene Beträge addiert werden:

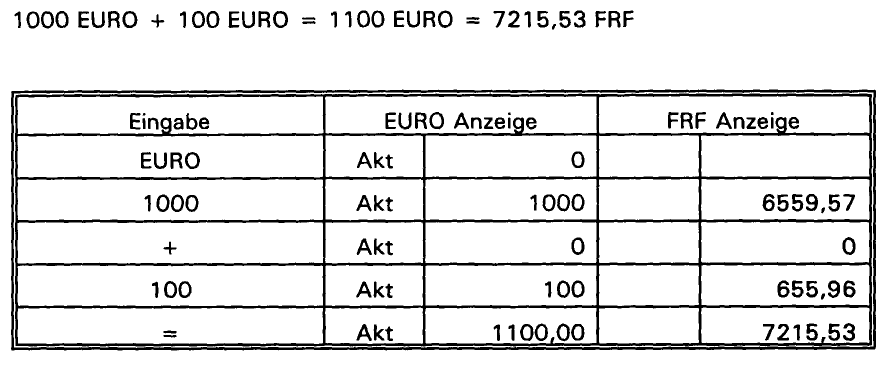

Die Summanden werden sofort bei der Eingabe umgerechnet. Die Summe wird sowohl in Euro als auch in Französischen Francs angezeigt.

### Beispiel 2:

Es sollen zwei in Euro eingegebene Beträge subtrahiert werden.

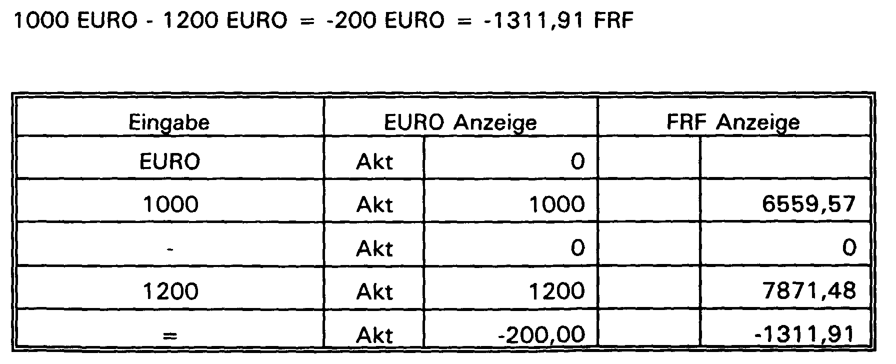

Dieses Beispiel entspricht der Umrechnung von Wechselgeld. Statt eines Betrages von 1000 Euro werden 1200 Euro bezahlt. Der herauszugebende Betrag wird sowohl in Euro als auch in der nationalen Währung angezeigt.

### Beispiel 3:

Es sollen zwei in nationaler Währung eingegebene Beträge subtrahiert werden.

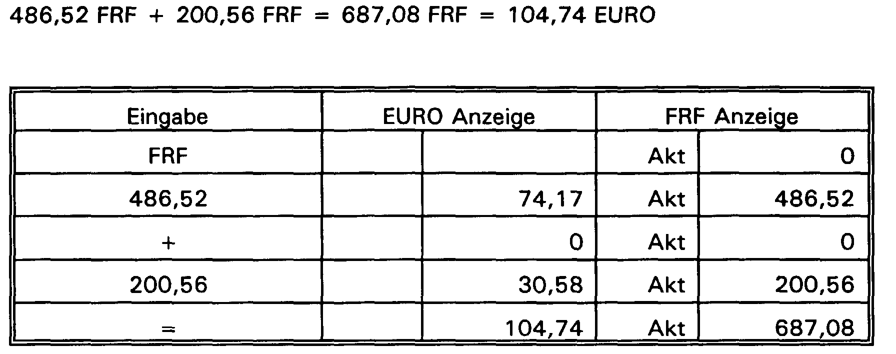

Dieses Beispiel ist analog zu Beispiel 1, hier jedoch für den Fall einer Summation in der nationalen Währung.

### Beispiel 4:

Es soll eine Mehrfachsumme in nationaler Währung umgerechnet werden.

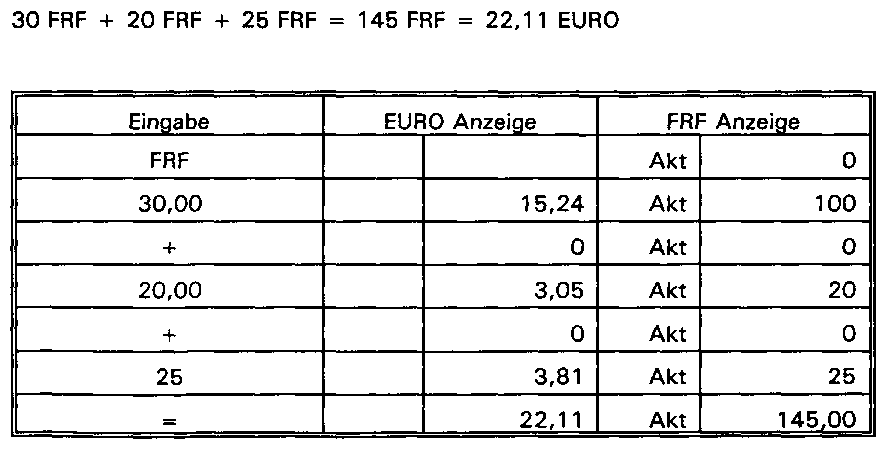

### Beispiel 5:

Es soll eine Multiplikation eines in Euro eingegebenen Betrages durchgeführt werden.

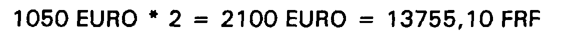

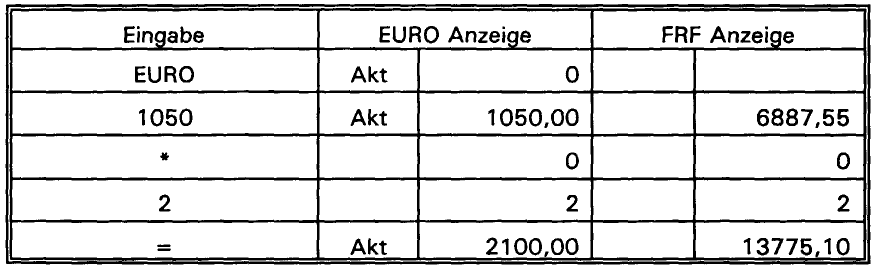

Zur Verdeutlichung dessen, daß der Faktor, mit dem der Währungsbetrag multipliziert wird, nicht umzurechnen ist, wird das Aktivierungssymbol für die Eingabe des Faktors gelöscht und der Faktor in beiden Anzeigezeilen 28 und 30 zugleich angezeigt. Nach Betätigung der Auslösetaste erscheint das Aktivierungsymbol wieder in der Euro-Anzeigezeile 28.

### Beispiel 6:

Es soll ein in Euro eingegebener Währungsbetrag dividiert werden.

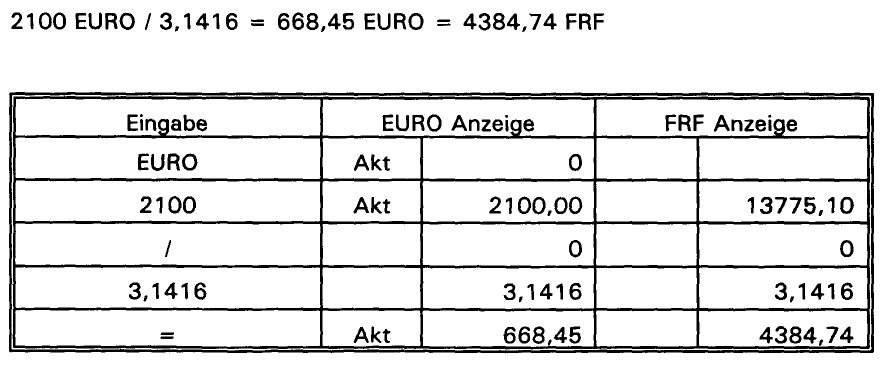

### Beispiel 7:

Es sollen zwei Beträge addiert werden, von denen der erste in Euro und der zweite in nationaler Währung eingegeben wird.

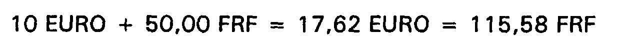

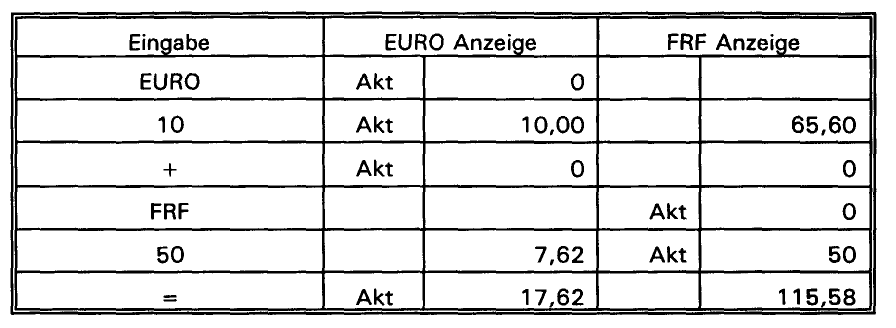

Zum Wechsel der Eingabewährung wird nach Betätigung der Funktionstaste 18 ("+") die Auswahltaste 16 für die nationale Währung gedrückt. Daraufhin wird die Euro-Anzeigezeile 28 gelöscht und das Aktivierungssymbol erscheint in der FRF-Anzeigezeile 30 zusammen mit einer "0". Anschließend wird der Betrag in Französischen Francs eingegeben, wobei wie gewohnt seine Umrechnung in Euro Schrift für Schrift erfolgt und angezeigt wird. Auf Betätigung der Auslösetaste 26 ("=") hin wird die Summe der eingegebenen Beträge berechnet und in beiden Währungen angezeigt.

### Beispiel 8:

Es sollen zwei in unterschiedelichen Währungen eingegebene Beträge subtrahiert werden.

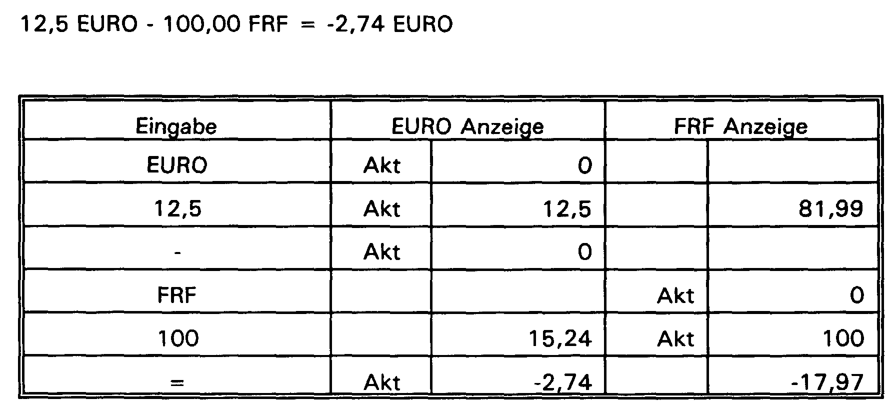

Dieses Beispiel zeigt die Vorteile des erfindungsgemäßen Währungsrechners besonders deutlich. Inder Praxis wird es unmittelbar nach der Währungsumstellung bei Kaufgeschäften häufig vorkommen, daß der in Euro ausgewiesene Betrag nicht exakt passend in nationaler Währung bezahlt wird. Durch Subtraktion des bezahlten Betrages in Franc vom Kaufpreis in Euro wird das Wechselgeld mit Hilfe des Währungsumrechners in beiden Währungen bestimmt, so daß ein Verkäufer den genauen Wechselgeldbetrag in Euro zurückgeben kann.

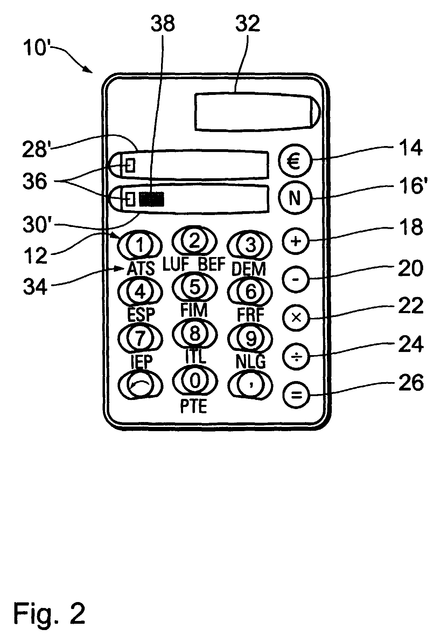

Figur 2 zeigt die Draufsicht eines erfindungsgemäßen Multidevisenrechners 10'. Soweit seine Ausgestaltung mit der des Monodevisenrechners aus Figur 1 übereinstimmt, werden in Figur 2 dieselben Bezugszeichen verwendet. Die folgende Beschreibung konzentriert sich auf die Unterschiede des vorliegenden Ausführungsbeispiels zur Ausführungsform nach Figur 1.

Die Eingabeeinheit 12 weist neben jeder Zifferntaste ein aus drei Buchstaben zusammengesetztes Währungskennzeichen auf. Beispielhaft ist ein Währungskennzeichen "ATS" mit dem Bezugszeichen 34 markiert. Da Belgische und Luxemburgische Francs gegenüber dem Euro denselben Umrechnnugskurs aufweisen, sind diese beiden Währungen zusammen der Zifferntaste 2 zugeordnet. So ist durch die Beschriftung der Eingabeeinheit 12 mit Währungskennzeichen 34 jeder Währung eindeutig eine Zifferntaste zugeordnet.

Die Anzeigezeilen unterscheiden sich ebenfalls im Detail von denen des Ausführungsbeispiels der Figur 1 und sind hier mit Bezugszeichen 28' und 30' gekennzeichnet. Die Anzeigezeile 28' für Währungsbeträge in Euro weist ein zusätzliches Anzeigefeld 36 für ein Aktivierungssymbol auf. Ein gleichartiges Anzeigefeld 36 für ein Aktivierungssymbol ist auch in der Anzeigezeile 30' angeordnet. Weiterhin weist die untere Anzeigezeile 30' ein alphanumerisches Anzeigefeld 38 für dreistellige Buchstabenkürzel auf. Das Anzeigefeld 38 dient zur Anzeige einer ausgewählten nationalen Währung. Die 11 in der Eingabeeinheit verwendeten Währungskürzel sind in einem Speicher abgelegt und können im Anzeigefeld 38 zur Anzeige gebracht werden. Auf die Vorgehensweise bei der Währungsauswahl wird weiter unten näher eingegangen.

In Verlängerung der Anzeigezeile 30' ist ein mit dem Buchstaben "N" gekennzeichnetes Auswahlelement 16' angeordnet, das wie das Auswahlelement 16 beim Ausführungsbeispiel nach Figur 1 zur Bestimmung zur Bestimmung der Umrechnungsrichtung dient, hier genauer: der ausgewählten nationalen Währung als Eingabewährung dient.

Zur Auswahl der umzurechnenden Landeswährung wird bei angeschaltetem Rechner erfindungsgemäß eine der mit einem Währungskürzel 34 versehenen Tasten, also eine Zifferntaste über eine längere Zeitspanne niedergedrückt. Diese Zeitspanne beträgt beispielsweise zwei Sekunden. Wird also zum Beispiel die Zifferntaste "3" mindestens zwei Sekunden lang ununterbrochen betätigt (je nach Tastaturart also niedergedrückt oder lediglich berührt), so zeigt die Anzeigezeile 30' das der Deutschen Mark entsprechende Währungssymbol an, also "DEM". Die Recheneinheit des Währungsumrechners 10' greift nun auf eine Umrechnungskonstante zwischen Euro und Deutscher Mark zu. Diese ist wie die Umrechnungskonstanten zwischen Euro und allen anderen nationalen Währungen in einem Festwertspeicher enthalten.

War vor dem Wechsel der ausgewählten Währung ein Betrag in den numerischen Anzeigen 16 und 18 dargestellt, so wechselt der in einer der beiden Zeilen 28' und 30' angezeigt Betrag, je nach vorbestimmter Umrechnungsrichtung. War beispielsweise der Euro als Eingabewährung festgelegt, zuvor als nationale Währung FRF ausgewählt und wurde nun DEM ausgewählt, so ändert sich der in der Anzeigezeile 30' angezeigte Betrag. Diese zeigt nun den Gegenwert des in der Zeile 28' angezeigten Euro-Betrages in DEM an. Wichtig hierbei ist, daß die Umrechnung erst nach dem Loslassen und der beschriebenen Auswertung der Zeitspanne der Betätigung einer Zifferntaste gestartet wird. War wie beim zuvor beschriebenen Beispiel etwa der Betrag "52" Euro zur Umrechnung in Französische Franc eingegeben worden, so springt die untere LCD-Zeile 30' nun von "341.10" auf "101.70". Gleichzeitig wechselt das im Anzeigefeild 38 dargestellte Kürzel von "FRF" nach "DEM".

War dagegen zuvor der Betrag "341.10" in Französischen Franc zur Umrechnung in Euro eingegeben worden, so springt die obere LCD-Zeile 28' nach Auswahl der Währung Deutsche Mark auf "174.40" um.

Zur weiteren Verdeutlichung der aktuell ausgewählten Umrechnungsrichtung dient das oben eingehend erläuterte Aktivierungssymbol im Anzeigefeld 36. Dieses bleibt bei einer Neubestimmung der nationalen Währung in der Anzeigezeile, in der es bis dahin angezeigt wurde. Erst durch Betätigung der Auswahltaste 14 oder 16 kann die Eingabewährung und damit die Umrechnungsrichtung neu bestimmt werden.

Während der Vergleich eines festen Euro-Betrages mit den entsprechenden Beträgen in verschiedenen Landeswährungen eine in der Praxis häufig auftretende Fragestellung ist, wird die Umrechnung eines in verschiedenen Landeswährungen gleichen Betrages in den entsprechenden Euro-Betrag wenig praxisrelevant sein und möglicherweise verwirrend wirken. In einer Variante dieses Ausführungsbeispiels ist daher vorgesehen, die Anzeigezeilen 28' und 30' bei Auswahl einer anderen Landeswährung zurückzusetzen, wenn zuvor in Landeswährung eingegeben worden war. Das heißt, im zuletzt erwähnten Beispiel wird nach langer Betätigung der Zifferntaste "3" die obere Anzeigezeile 28' gelöscht, während in der unteren Anzeigezeile 30' neben dem Währungszeichen "DEM" eine "0" an der niedrigstwertigen Stelle erscheint.

Alle Funktionsmerkmale des Ausführungsbeispiels nach Figur 1 sind mit dem Multidevisenrechner 10' für jede nationale Währung der europäischen Währungsunion zugänglich.

Zusätzlich ist der Multidevisenrechner 10' zur Durchführung von Grundrechenoperationen nicht nur mit dem Euro und der jeweils ausgewählten nationalen Währung ausgebildet. Es können vielmehr auch Grundrechenoperationen mit dem Euro und bis zu allen 10 nationalen Währungen durchgeführt werden. Die ausgewählte nationale Währung kann - muss aber nicht - bei der Ausführung von Grundrechenoperationen vor jeder Eingabe eines Währungsbetrages neu bestimmt werden. Dieses Funktionsmerkmal wird im folgenden anhand eines weiteren Beispiels erläutert. Die oben verwendete Tabellenform der Darstellung wird beibehalten. Die oben mit "FRF-Anzeige" überschriebene Spalte ist hier entsprechend mit 'Nationale Anzeige' gekennzeichnet und gibt den jeweils in der Anzeigezeile 30' dargestellten Währungsbetrag wieder. In einer zusätzlichen, mit "Symbol" überschriebenen Spalte wird aufgeführt, welches Währungskürzel im Anzeigefeld 38 nach den einzelnen Eingabeschritten dargestellt wird.

### Beispiel 9

Es sollen Beträge in Euro sowie zwei nationalen Währungen miteinander verrechnet werden. Als nationale Währung ist zunächst FRF vorausgewählt.

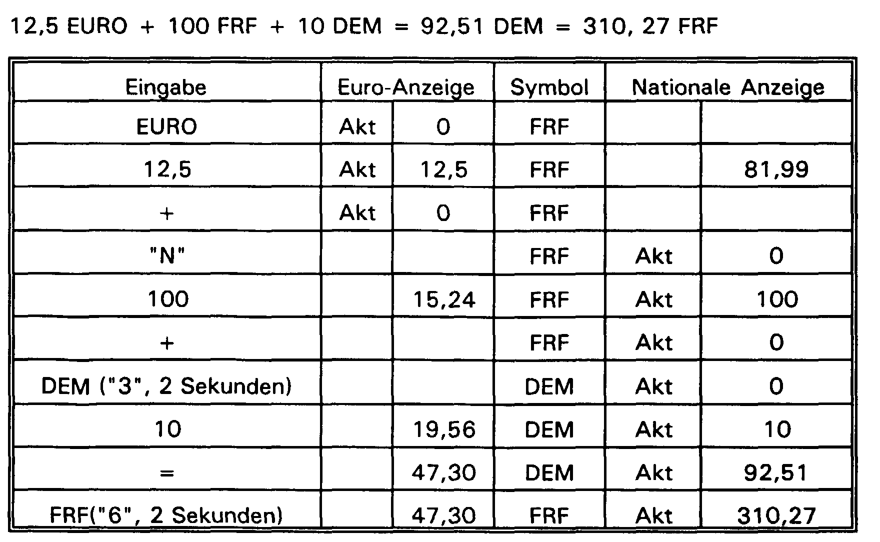

Der Wechsel von der Eingabewährung Euro zur Eingabewährung FRF erfolgt also durch Betätigung der mit "N" beschrifteten Auswahltaste 16'. Der Wechsel der nationalen Währung wird nach Eingabe der Operationstaste "+" durch Betätigung der Taste "3" für die Dauer von ca. 2 Sekunden vorgenommen. Die zuvor getätigte Auswahl der Eingabewährung bleibt von der Auswahl der nationalen Währung unberührt. Ein Vergleich des Ergebnisses der Rechenoperation in verschiedenen Währungen kann durch sukzessive Betätigung der jeweils zugeordneten Zifferntasten für jeweils ca. 2 Sekunden vorgenommen werden. Dies ist im obigen Beispiel 9 anhand des Wechsels von DEM zu FRF in der letzten Zeile der Tabelle dargestellt.

In analoger Weise können wiederum mit Hilfe von Subtraktionen Restgeldberechnungen vorgenommen werden. Dieses Funktionsmerkmal ist vor allem in Grenzregionen von Mitgliedsländern der Währungsunion hilfreich, in denen bisher zwei nationale Währungen als Zahlungsmittel im Geschäftsverkehr in der Regel akzeptiert wurden.

Es versteht sich, daß zur Vereinfachung auf dieses zusätzliche Funktionsmerkmal verzichtet und die Grundrechenoperationen wie zuvor beschrieben nur für den Euro und die jeweils ausgewählte nationale Währung vorgesehen werden können.

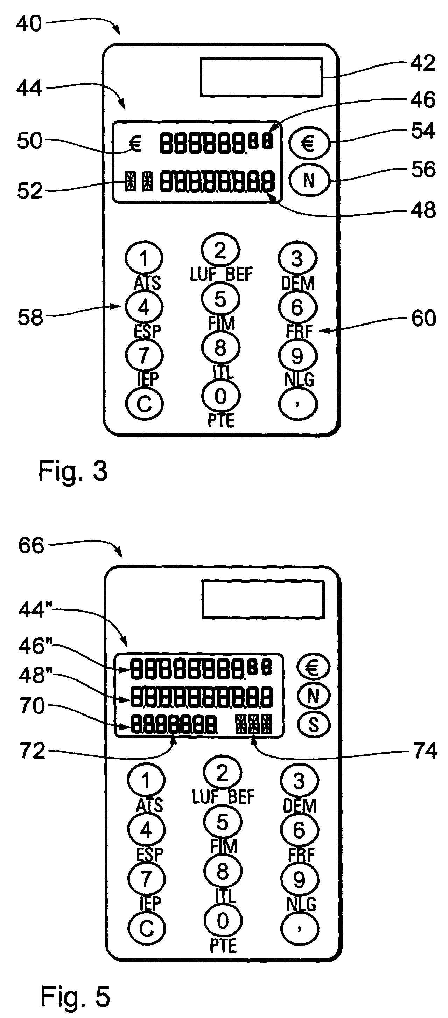

Anhand der in den Figuren 3 bis 6 gezeigten Draufsichten werden im folgenden die Funktionsweisen weiterer Ausführungsbeispiele der Erfindung erläutert. Hierbei handelt es sich um Währungsrechner mit unterschiedlichen Arten der Währungsauswahl und der Anzeige der ausgewählten Währung. Diese sind zur Vereinfachung der hiesigen Darstellung nicht mit den oben beschriebenen Grundrechenfunktionen ausgestattet. Es versteht sich jedoch, daß diese Rechner entsprechend dem oben Beschriebenen ohne weiteres mit der zusätzlichen Ausstattung für Grundrechenfunktionen hergestellt werden können. Jedoch sind die hier dargestellten Arten der Währungsauswahl nicht auf Währungsrechner mit Grundrechenarten beschränkt. Sie können in gleicher Weise auch bei reinen Währungsumrechnern zum Einsatz kommen, bei denen lediglich Umrechnungen zwischen einer ersten Währung und einer auswählbaren zweiten Währung vorgenommen werden können.

Figur 3 zeigt die Bedienungs- und Anzeigeoberfläche eines Multidevisenrechners 40. Zur Spannungsversorgung ist ein in ihr Gehäuse eingebettetes Solarzellenfeld 42 vorgesehen, bei dem eine Anzahl photovoltaischer Elemente in Serie geschaltet ist. Durch die Versorgung mittels Solarzellen und eine entsprechend niedrige Dimensionierung des Stromverbrauchs der Vorrichtung entsteht bei einer späteren Entsorgung keine Umweltbelastung durch Batteriebestandteile. Es ist jedoch ohne weiteres möglich, bei der Herstellung eine herkömmliche Energieversorgung mittels Batterien oder Akkumulatoren, oder eine Kombination dieser Varianten mit einem Solarzellenfeld vorzusehen.

Ebenfalls in das Gehäuse eingebettet ist ein LCD-Display 44 mit zwei 8-stelligen, numerischen LCD-Zeilen 46 und 48, die für die Anzeige von Währungsbeträgen in Euro und in einer auswählbaren, zweiten Währung vorgesehen sind. Die obere Zeile 46 ist für die Darstellung von Währungsbeträegen in Euro vorgesehen und hat neben sechs numerischen Anzeigeelementen für den ganzzahligen Anteil zwei rechts davon hinter einem Dezimalpunkt angeordnete, kleinere und hochgestellte Anzeigeelemente für die Cent-Anzeige. Zur unmittelbaren Verdeutlichung der Zuordnung zwischen Währung und Währungsbetrag im Display 44 ist links neben der oberen LCD-Zeile 46 ein Euro-Symbol 50 dargestellt. Dieses ist der Einfachheit halber auf das Außenfenster des LCD-Displays aufgedruckt, kann aber auch hinter diesem angeordnet, beispielsweise von der Innenseite her aufgeklebt sein. Links neben der unteren LCD-Zeile 48 und unterhalb des Euro-Symbols 50 ist im Display 44 ein Paar alphanumerischer LCD-Anezeigeelemente 52 vorgesehen, das die ausgewählte Landeswährung mit Hilfe zweier Zeichen, vorzugsweise Buchstaben anzeigt. Zur Unterscheidung der nationalen Währungen genügen zwei Buchstaben.

Rechts neben dem LCD-Display sind zwei Auswahltasten 54 und 56 untereinander angeordnet. Die obere Auswahltaste 54 ist mit dem Eurosymbol gekennzeichnet, die untere (56) mit dem Buchstaben "N", der als Anfangsbuchstabe des Wortes "Nation" in allen Sprachen der an der Gemeinschaftswährung beteiligten Länder intuitiv verständlich ist.

Mit etwas Abstand zum LCD-Display 44 und den Auswahltasten 54 und 56 ist unterhalb eine Tastatur 58 angeordnet. Ihre Tasten sind jeweils mit einer der Ziffern von 0 bis 9, einem Kommazeichen bzw. dem Buchstaben "C" gekennzeichnet. Schräg unterhalb der Zifferntasten "0" bis "9" sind jeweils in unmittelbarer Nähe aus drei Buchstaben zusammengesetzte Währungskürzel dargestellt. Als Beispiel ist das für den Französischen Franc stehende Kürzel "FRF" rechts unterhalb der Zifferntaste "6" mit dem Bezugszeichen 30 gekennzeichnet. Die Währungskürzel 60 symbolisieren die Landeswährungen der zehn an der Währungsunion beteiligten Staaten.

Die Tastatur 58 ist als Gummi- oder Kunststofftastatur ausgebildet und im Gehäuse eingebettet. Es kann aber bei diesem wie bei allen anderen Ausführungsbeispielen ebenso jede andere gängige Tastaturart verwendet werden, beispielsweise eine Folientastatur.

Der Währungsumrechner 40 kann in verschiedenen Größen und Formaten und mit den unterschiedlichsten farblichen Gestaltungen der seiner Oberfläche prodzuziert werden. Wesentlich ist jedoch das Konzept der Anordnung der verschiedenen Tasten und Anzeigeelemente auf der Oberfläche und die damit einhergehende, besonders einfache und im folgenden dargestellte Bedienungsweise. Diese korrespondiert in für den Fachmann unmittelbar einsichtiger Weise mit dem inneren Aufbau der erfindungsgemäßen Vorrichtung, also den verwendeten Bauelementen und ihrer Verschaltung.

Der Währungsumrechner 40 wird durch Betätigung einer der Auswahltasten 54 oder 56 angeschaltet. Wird die Taste 54 gedrückt, so erscheint zunächst in der oberen LCD-Zeile eine "0" an der niedrigstwertigen Stelle der Euro-Anzeigeelemente. Die hochgestellten Cent-Anzeigeelemente sind zunächst nicht aktiviert. Die zweite LCD-Zeile 48 ist zunächst ebenfalls leer. Lediglich das Währungssymbol der vor dem Abschalten zuletzt ausgewählten Währung wird durch die alphanumerischen Anzeigeelemente 52 dargestellt. Auf diese Weise ist dem Benutzer zu diesem Zeitpunkt unmittelbar klar, daß eine nachfolgende Zahleneingabe über die Zifferntasten vom Währungsumrechner als Währungsbetrag in Euro interpretiert wird.

Bei einer Eingabe eines Währungsbetrages wird wird nach jeder Betätigung einer Zifferntaste sofort nach dem Loslassen der Taste der dem in der ersten LCD-Zeile 46 angezeigten Betrag in Euro entsprechende Betrag in der ausgewählten Landeswährung angezeigt. Wird beispielsweise zunächst die Zifferntaste "5" gedrückt, erscheint unmittelbar darauf in der oberen LCD-Zeile 46 eine "5" und in der unteren LCD-Zeile der Ausdruck "32.80". Wird darauf hin die Zifferntaste "2" betätigt, ist in der oberen LCD-Zeile 46 die Zahl "52" sichtbar, in der unteren erscheint unmittelbar der entsprechende Betrag in Französischen Franc, nämlich "341.10". Der Währungsumrechner 40 greift beim Umrechnungsvorgang mit seiner Verarbeitungseinheit auf eine in einem Festwertspeicher abgelegte Umrechnungskonstante zu.

Eine versehentliche Eingabe kann durch Betätigen der "C"-Taste rückgängig gemacht werden. Wird also etwa im gerade erläuterten Beispiel nach Betätigung der Zifferntaste "2" die "C"-Taste gedrückt, springt die obere LCD-Anzeige 46 zurück auf "5" und die untere LCD-Anzeige 48 zurück auf "32.80".

Soll ein neuer Betrag umgerechnet werden, wird entsprechend der gewünschten Umrechnungsrichtung erneut eine der Betätigungstasten gedrückt. Wird wieder die Umrechnung von Euro in Französische Franc gewünscht, so wird die mit dem Euro-Symbol gekennzeichnet Auswahltaste 54 gedrückt. Daraufhin springen die LCD-Anzeigen 46 und 48 zurück in die oben beschriebene anfängliche Einstellung.

Wird dagegen eine Umrechnung von Französischen Franc nach Euro gewünscht, so wird die N-Taste betätigt, woraufhin die LCD-Anzeige 46 erlischt und in der LCD-Anzeige 48 eine "0" erscheint. Nun kann analog zum oben gegebenen Beispiel ein Betrag in Französischen Franc eingegeben werden, wobei, wie beschrieben, nach jedem Tastendruck "simultan" das Umrechnungsergebnis in der oberen LCD-Zeile 46 angezeigt wird. Der Währungsumrechner hat hierzu entweder eine mit der "N"-Taste 56 gekoppelte Umschaltvorrichtung, die die Verarbeitungseinheit veranlaßt, bei der Umrechnung statt wie zuvor mit dem Umrechnungsfaktor zu multiplizieren, nun durch ihn zu dividieren. Entsprechend erfolgt beim Betätigen der "Euro"-Taste 46 eine Rückstellung auf die Multiplikation. Alternativ kann jedoch auch beim Umschalten der Umrechnungsrichtung auf eine zweite, zur ersten reziproke Umrechnungskonstante zugegriffen werden, mit der die Verarbeitungseinheit den eingegebenen Betrag multipliziert.

Es wird deutlich, daß die Auswahltasten 54 und 56 in intuitiver Weise zum einen zur Bestimmung der Umrechnungsrichtung dienen und zum anderen der Rechner durch ihre Betätigung zurückgesetzt wird und für die Eingabe eines neuen Betrages in der durch den entsprechenden Tastendruck angezeigten Währung vorbereitet wird.

In einer weiteren Variante dieses Ausführungsbeispiels kann der Währungsumrechner 40 auch zur Umrechnung einer Währung mit gegenüber dem Euro wechselndem Umrechnungsfaktor programmiert werden. Hierbei ist ein Schreib-Lese-Speicher zur Aufnahme des Umrechnungsfaktors vorgesehen. Neben der in der Tastatatur unten rechts angeordnete ","-Taste wird in gleicher Weise wie die Währungskürzel an den Zifferntasten ein "X" dargestellt, das die Möglichkeit zur Umrechnung in eine "Drittwährung" durch entsprechend langes Drücken der ","-Taste kennzeichnet.

Die Programmierung des Umrechnungsfaktors für die "Drittwährung" erfolgt bei dieser Variante nach zweimaliger, kurz hintereinander erfolgter Betätigung der Taste "," über die Zifferntasten. Abschließend wird die ","-Taste erneut zweimal hintereinander kurz betätigt, woraufhin der eingegebene und dabei in der unteren LCD-Zeile 48 dargestellte Umrechnungsfaktor im Schreib-Lese-Speicher abgelegt wird und das Gerät zurück in den Umrechnungsmodus springt.

Die im folgenden beschriebenen Ausführungsbeispiele unterscheiden sich nur in wenigen Merkmalen vom soeben dargestellten Währungsumrechner 40. Daher wird lediglich auf die wesentlichen Unterschiede eingegangen.

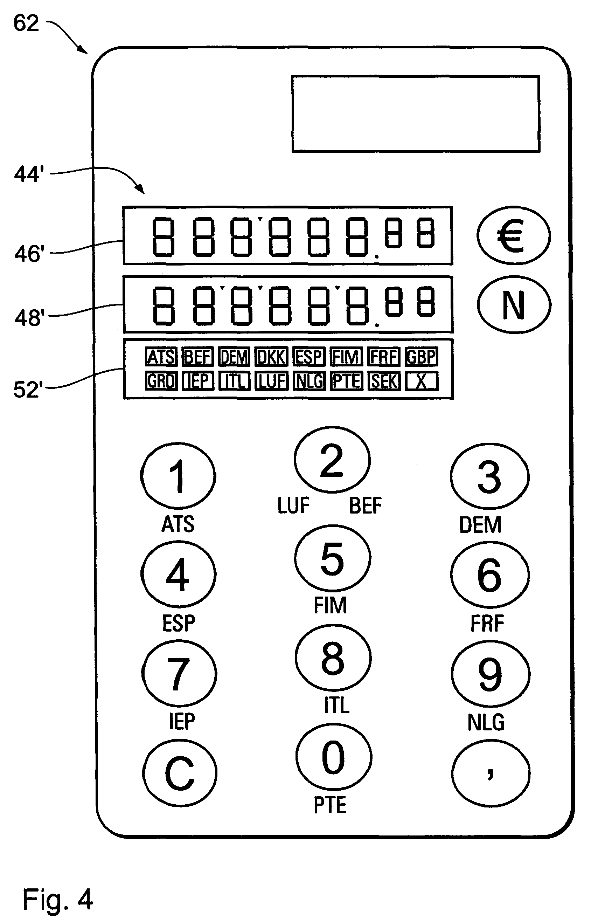

Figur 4 zeigt ein zweites Ausführungsbeispiel 32 der Erfindung, das an seiner Oberfläche vom ersten lediglich im LCD-Display unterschieden ist, hier dem Bezugszeichen 44' gekennzeichnet. Das Display 44' ist in drei zeilenförmige Elemente 46', 48' und 52' unterteilt, deren Aufgabe dieselbe ist wie die der LCD-Zeilen 46 und 48 bzw. des Anzeigenelementpaares 52 beim oben beschriebenen Währungsumrechner 40. Die beiden oberen LCD-Zeilen 46' und 48' sind gleichartig ausgebildet und haben an ihrem rechten Ende zwei kleinere, hochgestellte numerische Anzeigeelemente zur Darstellung von Bruchteilen eines Euros bzw. der Einheit einer Landeswährung (also Cent bzw. Centimes, Pfennige etc.). Das dritte, darunter angeordnete und zeilenförmige LCD-Anzeigeelement 52' dient zur Anzeige von Währungssymbolen. Diese sind im Anzeigeelement 52' in zwei übereinanderstehenden Zeilen nebeneinander angeordnet.

Auf die Darstellung des Euro-Symbols am linken Rand der Zeile 46' wird hier verzichtet. Die rechts neben den Zeilen angeordneten und mit dem Euro-Symbol bzw. dem Buchstaben "N" gekennzeichneten Auswahltasten ermöglichen dem Nutzer jedoch nach wie vor eine unmittelbare Zuordnung zwischen der Zeile und der darin angezeigten Währung. Je nach ausgewählter Währung ist das ihr entsprechende Symbol in der LCD-Zeile 52' sichtbar, während die anderen nicht sichtbar sind. Dabei sind zur Vereinfachung des Produktionsprozesses auch Symbole für verschiedene, noch nicht zur Währungsunion gehöhrende Landeswährungen (beispielsweise "GRD" für Griechische Drachmen) vorgesehen. Für den Vertrieb in diesen Ländern wird in einer hier nicht gezeigten Variante dieses Ausführungsbeispiels das entsprechende Symbol neben der Taste für das Dezimalzeichen, hier mit "," beschriftet, dargestellt. Die mit dieser Taste verknüpften Funktionsmerkmale, also Dezimaltrennung, Währungsauswahl und Programmierung sind ansonsten identisch mit denen der Dezimaltaste des Währungsrechners 40 aus Figur 1 identisch.

Es versteht sich, daß der Rechner in seiner LCD-Zeile 52' auch mit nur einer Symbol-Zeile ausgestattet werden kann und entsprechend nur über fest eingespeicherte Umrechungsfaktoren für die Währungen der Mitgliedsländer der europäischen Währungsunion verfügt.

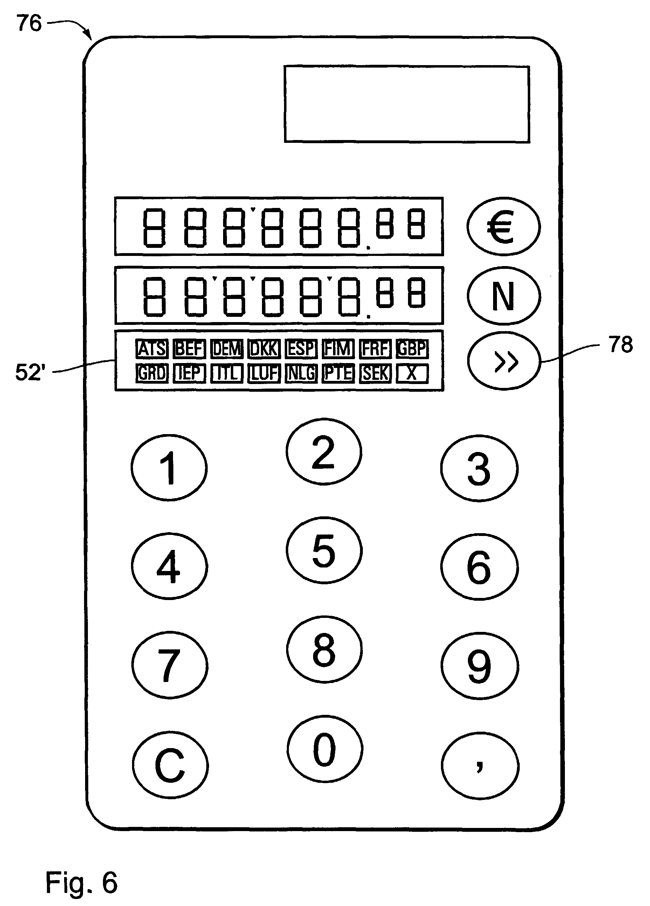

Figur 5 zeigt ein weiteres Ausführungsbeispiel 66, bei dem zur als Alternative zur Auswahl der umzurechnenden Währung eine zusätzliche Auswahltaste 68 vorgesehen ist. Die mit dem Buchstaben "S" gekennzeichnete Auswahltaste 68 veranlaßt den Rechner 66, in einen Auswahlmodus zu wechseln und die Eingabe einer Zifferntaste abzuwarten. Den Zifferntasten sind bei diesem Währungsumrechner ebenso wie bei den vorangegangenen Ausführungsbeispielen Währungen zugeordnet. Wird nach Betätigung der Auswahltaste 68 eine Zifferntaste gedrückt, so reagiert der Währungsumrechner 66 wie bei der Auswahl der Währung im ersten Ausführungsbeispiel anhand von Figur 1 beschrieben. Die Betätigung einer Zifferntaste im Anschluß an die Auswahltaste 68 erzeugt also ein Steuersignal für die Recheneinheit, durch das der Zugriff auf die zugeordnete Umrechnungskonstante veranlaßt wird. Die Ausgabeeinheit ignoriert die Betätigung der Zifferntaste insoweit, als die Ziffer nicht in der Anzeige dargestellt wird.

Beim Währungsumrechner 66 wird zur Anzeige ein dreizeiliges LCD-Display 44'' verwendet. Dessen obere zwei Zeilen 46'' und 48'' sind ähnlich wie bei den beiden oben dargestellten Ausführungsbeispielen ausgebildet. Die dritte Zeile 70 des LCD-Displays 44'' ist in zwei Abschnitte 72 und 74 unterteilt. Der Abschnitt 72 enthält ein siebenstelliges numerisches Anzeigeelement, das zur Anzeige des jeweils zur Umrechnung verwendeten Umrechnungsfaktors dient. Der Abschnitt 74 enthält ein dreistelliges alphanumerisches Anzeigeelement, durch das wie beim Anzeigeelement 52 ein, hier jedoch dreistelliges, Währungskürzel zur Anzeige gebracht wird. Die dreistellige Anzeige hat den Vorteil, daß das dargestellte Kürzel mit einem der bei den Zifferntasten dargestellten Kürzel ist und der Nutzer nicht verschiedene Kürzel für ein und dieselbe Währung im Kopf haben muß.

In einer nicht dargestellten Variante dieses Ausführungsbeispiels wird zur Anzeige das anhand von Figur 4 beschriebene, dreiteilige Display 44' verwendet. Generell sind die in den verschiedenen Ausführungsformen des Multidevisenrechners verwendeten Anzeigen nicht an die Verwendung mit der jeweiligen Ausführungsform gebunden.

Figur 6 zeigt als weiteres Ausführungsbeispiel einen Währungsumrechner 76 mit einer anderen, sehr einfachen Methode zur Auswahl einer Landeswährung. Bei diesem Gerät ist unterhalb der oben beschriebenen Taste "N" zur Bestimmung der Umrechnungsrichtung eine Auswahltaste 78 angeordnet, die mit einem nach rechts weisenden Doppelpfeil-Symbol gekennzeichnet ist. Dieses Symbol ist von verschiedenen Geräten her, wie beispielsweise CD-Spielern, bekannt und wird allgemein mit "Weiter" oder "Vorwärts" assoziiert. Diese Auswahltaste ist rechts neben einem Anzeigelement angeordnet, das mit dem Anzeigelement 52' in Figur 4 baugleich ist. Es ist daher mit demselben Bezugszeichen gekennzeichnet.

Die Auswahl der umzurechnenden Währung erfolgt bei diesem Währungsumrechner in einer von Mobiltelefonen oder Armbanduhren her bekannten, einer Menüsteuerung ähnlichen Weise. Auf eine Betätigung der Taste 78 hin wird im Anzeigeelement 52' dasjenige Währungssymbol dauerhaft angezeigt, das unmittelbar rechts neben dem bis dahin angezeigten Währungssymbol angeordnet ist, welches gleichzeitig deaktiviert wird und nicht mehr sichtbar ist. Es ist also bei angeschaltetem Gerät immer nur ein Symbol angezeigt. Die Verarbeitungseinheit greift, wie oben näher dargestellt, anschließend auf die dem dargestellten Währungssymbol zugeordnete Umrechnungskonstante zu, worauf hin die Anzeige des von ihr berechneten Währungsbetrages in der oben beschriebenen Weise geändert wird. Mit jeder Betätigung der Auswahltaste 78 wird zur im Symbolfeld des Anzeigeelementes 52' "benachbarten" Währung umgeschaltet. Am rechten Ende der ersten Zeile angelangt wird bei erneuter Betätigung das in der zweiten Zeile am weitesten links angeordnete Symbol aktiviert. Wird nach wiederholter Betätigung der Auswahltaste 78 das das rechte Ende der zweiten Symbolzeile erreicht, springt die Anzeige nach der nächsten Betätigung zurück auf das am linken Ende der ersten Symbolzeile angeordnete Währungssymbol.

Anstelle einer Auswahltaste 78 mit der beschriebenen Funktionalität können auch zwei Auswahltasten vorgesehen sein, die vorzugsweise nebeneinander angeordnet sind. Da eine Anordnung neben dem Anzeigeelement 52' besonders intuitiv ist, sind die Auswahltasten vorzugsweise kleiner, also etwa halb so groß ausgebildet wie das Auswahlelement 78, um eine derartige Anordnung zu ermöglichen. Die rechte der beiden Auswahltasten weist exakt Funktionsmerkmale der beschriebenen Auswahltaste 78 auf und ist ebenfalls mit einem nach rechts weisenden Doppelpfeil gekennzeichnet. Die linke der beiden Auswahltasten jedoch ist mit einem nach links weisenden Doppelpfeil gekennzeichnet und erlaubt die Auswahl des jeweils links vom derzeitig aktivierten Währungssymbol angeordneten Zeichens. In ihrer Funktionsweise ergänzt sie also die beschriebene Auswahltaste 78 und macht die Auswahl der Währung noch einfacher und schneller.

## Patentansprüche

1. Vorrichtung zur Währungsumrechnung, mit einer Eingabeeinheit (12), die für die manuelle Eingabe von Währungsbeträgen ausgebildet ist und Auswahlmittel (14, 16; 16'; 54, 56) für die Bestimmung einer Eingabewährung aufweist, einer Recheneinheit, die mit der Eingabeeinheit (12) verbunden und zur Durchführung der Umrechnung eines eingegebenen Währungsbetrages sowie zur Durchführung von Grundrechenoperationen mit Eingabebeträgen derselben Währung ausgebildet ist, einer Ausgabeeinheit (28, 30; 28', 30'; 44, 46, 48; 44', 46', 48'; 44'', 46'', 48''), die mit der Recheneinheit verbunden ist, einen ersten (28; 28'; 46; 46'; 46'') und eine zweiten, dem ersten benachbart angeordneten Anzeigebereich (30; 30'; 48; 48'; 48'') aufweist und zur gleichzeitigen Anzeige eines eingegebenen und eines umgerechneten Währungsbetrages in jeweils einem der Anzeigebereiche ausgebildet ist, dadurch gekennzeichnet, daß die Recheneinheit zusätzlich zur Durchführung der Grundrechenoperationen mit Eingabebeträgen unterschiedlicher Währungen ausgebildet ist.

2. Vorrichtung nach Anspruch 1, dadurch gekennzeichnet, daß mindestens eine Teilanzahl der zur Währungsumrechnung erforderlichen Umrechnungskonstanten in einem mit der Recheneinheit verbundenen Festwertspeicher enthalten ist.

3. Vorrichtung nach Anspruch 1 oder 2, dadurch gekennzeichnet, daß der Festwertspeicher mindestens eine zur Umrechnung zwischen der Währung Euro und der nationalen Währung eines Mitgliedsstaates der europäischen Währungsunion erforderliche Umrechnungskonstante enthält.

4. Vorrichtung nach einem der Ansprüche 1 bis 3, dadurch gekennzeichnet, daß die Auswahlmittel (14, 16; 16'; 54, 56) ein erstes (14; 54) und ein zweites (16; 16'; 56) manuell betätigbares Auswahlelement aufweisen und daß die Recheneinheit zur Multiplikation bzw. Division eines Eingabebetrages mit der bzw. durch die Umrechnungskonstante ausgebildet ist, je nach dem, ob das erste (14; 54) oder zweite Auswahlelement (16; 16'; 56) betätigt wird.

5. Vorrichtung nach einem der vorstehenden Ansprüche, dadurch gekennzeichnet, daß die Ausgabeeinheit (28, 30; 28', 30'; 44, 46, 48; 44', 46', 48'; 44'', 46'', 48'') zur Anzeige von Beträgen in der Währung Euro im ersten (28; 28'; 46; 46'; 46'') und zur Anzeige von Beträgen in der nationalen Währung im zweiten Anzeigebereich (30; 30'; 48; 48'; 48''), unabhängig davon, welche Währung als Eingabewährung bestimmt ist, ausgebildet ist.

6. Vorrichtung nach Anspruch 4 oder 5, dadurch gekennzeichnet, daß das erste Auswahlelement (14; 54) dem ersten Anzeigebereich (28; 28'; 46; 46'; 46'') und das zweite Auswahlelement (16; 16'; 56) dem zweiten Anzeigebereich (30; 30'; 48; 48'; 48'') zugeordnet ist.

7. Vorrichtung nach einem der vorstehenden Ansprüche, dadurch gekennzeichnet, daß die Recheneinheit zur Währungsumrechnung Eingabeschritt für Eingabeschritt ausgebildet ist und daß die Ausgabeeinheit (28, 30; 28', 30'; 44, 46, 48; 44', 46', 48'; 44'', 46'', 48'') zur Anzeige des Eingabebetrages sowie des Ergebnisses der Umrechung Eingabeschritt für Eingabeschritt ausgebildet ist.

8. Vorrichtung nach einem der vorstehenden Ansprüche, dadurch gekennzeichnet, daß der Festwertspeicher die zur Umrechnung zwischen der Währung Euro und allen nationalen Währungen der Mitgliedsstaaten der europäischen Währungsunion erforderlichen Umrechnungskonstanten enthält.

9. Vorrichtung nach einem der vorstehenden Ansprüche, gekennzeichnet durch Steuermittel, die mit der Eingabeeinheit (12) sowie mit der Recheneinheit verbunden sind und zur Erfassung der Betätigungsdauer und/oder einer Mehrfachbetätigung mindestens eines Eingabeelementes und/oder Auswahlelementes (14, 16; 16'; 54, 56) sowie zur Steuerung des Zugriffs der Recheneinheit auf eine dem jeweiligen Eingabeelement oder Ausgabeelement zugeordnete Umrechnungskonstante im Festwertspeicher in Abhängigkeit von der Betätigung des Eingabe- bzw. Ausgabeelementes sowie dessen Betätigungsdauer und/oder Betätigungshäufigkeit ausgebildet sind.

10. Vorrichtung nach einem der Ansprüche 1 bis 8, gekennzeichnet durch Steuermittel, die mit der Eingabeeinheit (12) sowie mit der Recheneinheit verbunden und nach Art einer Menüsteuerung zur Steuerung des Zugriffs der Recheneinheit auf eine jeweilige Umrechnungskonstante im Festwertspeicher ausgebildet sind.

11. Vorrichtung nach einem der Ansprüche 4 bis 10, gekennzeichnet durch mindestens ein Symbolanzeigefeld (38; 52; 52'; 74), das dem zweiten Anzeigebereich (30; 30'; 48; 48'; 48'') zugeordnet ist und zur Anzeige von Zeichen (34; 60) zur Symbolisierung der ausgewählten nationalen Währung ausgebildet ist.

12. Vorrichtung nach Anspruch 11, dadurch gekennzeichnet, daß das Symbolanzeigefeld (38; 52) im zugeordneten Anzeigebereich (30';48) angeordnet ist.

13. Vorrichtung nach einem der vorstehenden Ansprüchen, gekennzeichnet durch einen Schreib-Lese-Speicher zur Aufnahme veränjderlicher Umrechnungskonstanten, der mit der Recheneinheit verbunden ist.
